# EUROPEAN PATENT SPECIFICATION

(11) **EP 0 832 715 B1**
(45) Date of publication and mention of the grant of the patent: **03.01.2007**
(21) Application number: 97830285.9
(22) Date of filing: 12.06.1997
(51) Int. Cl.: B23Q 11/08

(54) **Shock absorber device for telescopic protection devices**
Stossdämpfervorrichtung für teleskopartige Schutzvorrichtung
Dispositif 'amortisseur pour protections télescopique

(30) Priority: 30.09.1996 IT BO960491
(43) Date of publication of application: 01.04.1998
(73) Proprietor: P.E.I. Protezioni Elaborazioni Industriali S.r.l., 40012 Calderara di Reno (Bologna) (IT)
(72) Inventor: Tabellini, Giorgio, 40037 Sasso Marconi, (Bologna) (IT)
(74) Representative: Lanzoni, Luciano

(56) References cited:
- EP-B- 0 290 822
- EP-B- 0 502 328
- DE-C- 3 829 984
- DE-U- 7 137 781
- DE-U- 8 901 686
- PATENT ABSTRACTS OF JAPAN vol. 096, no. 005, 31 May 1996 & JP 08 025169 A (ENOMOTO KOGYO KK), 30 January 1996

## Description

The present invention relates to a shock absorber device for telescopic protection devices of the type consisting of a plurality of box-shaped elements.

Protection devices of this type are mainly used for the guides of automatic machines, machine tools and robots, to prevent foreign matter, such as dirt, chippings and emulsions used to cool the area machined, from entering the guide contact zone.

Scrapers, normally made of elastomer or plastics, are fitted amongst the box-shaped elements. The scrapers not only prevent foreign matter from entering the gap between two contiguous box-shaped elements, but also allow the formation of a satisfactory hermetic seal.

Since the protection device is connected to the mobile part of the machine, extension of the box-shaped elements follows the speed of these mobile parts. This speed may be high and, considering the mass of the box-shaped elements, when the protection device is fully extended, a significant impact force between the box-shaped elements may be reached. Obviously, such impact must be avoided, to prevent wear on the protection device, to avoid the effects on the mobile parts of the machine and to limit the noise level.

It is, therefore, essential to fit shock absorber devices between the box-shaped elements. An example of these shock absorber devices is described in the patent for utility model DE-U-7137781. In the said document, the shock absorber device is simply obtained by applying a strip of synthetic cellular material to the rear of the scraper and the zone which makes contact with the smallest adjacent box-shaped element.

Another type of shock absorber device for the box-shaped elements of a telescopic protection device, made with a strip of synthetic material different to the scraper material is described in patent EP-B-290-822.

To increase the shock absorbing effect of the shock absorber devices made of strips of synthetic material, patent EP-B-502-328 describes a shock absorber device made using a strip of elastic material with holes which increase the deformability of the strip.

However, due to the high speed of the mobile machine parts, the mass of the box-shaped elements and the limited deformability of the shock absorber devices, impact is still possible with these types of shock absorber devices.

Moreover, when such protection devices arrive at the maximum extension, the elements which form the protection devices stop, passing from a high speed to zero velocity in a very short time, and so are subject to high deceleration, which may have a damaging effect on the mobile parts of the machines. Since these shock absorber devices are continuous along the entire perimeter of the box-shaped element, they are also relatively expensive.

It is also known from document DE3829984 a damping arrangement for telescopic cover devices, consisting of damping plates which are made of flat, elastomeric material and are of roughly H-shaped configuration. The damping plates are inserted with their centre web into correspondingly shaped cut-outs in the web of its supporting wall, in such a way that the impact of the larger box takes place on these damping plates with its wiper in the extension direction and with its supporting wall in the retraction direction.

Finally, document DE8901686U discloses a damper for telescopic protection devices, which damper comprises a strip mounted on a box of the telescopic protection device and is provided with a plurality of skew projections impacting on the edge of the next box, when the protection device is extended.

The aim of the present invention is to improve the capacity for absorption of impact between the elements which form the protection device.

The solution consists in a shock absorber device which allows impact absorption on a section of the protection element extension stroke longer than that of known devices, and a shape which allows more effective dispersal of the impact energy between the protection elements.

Other advantages of the invention are clearly described in the claims herein and the advantages of the invention are more clearly shown in the detailed description below, with reference to the accompanying drawings which illustrate a preferred embodiment, and in which:
- figure 1 is a perspective view of the telescopic protection device to which the shock absorber device disclosed is connected;
- figures 2 is a cross-section of the telescopic protection device shown in figure 1;
- figures 3, 4 and 5 show a sequence of the shock absorbing stages of the device disclosed:
- figure 6 is a perspective view of the telescopic protection device to which the shock absorber device is fitted, this being an alternative embodiment of the invention illustrated in figure 1.

The accompanying drawings show a telescopic protection device, labelled 1 as a whole, for automatic machines, machine tools and robots which are not illustrated. One end of the telescopic protection device 1 is secured to a fixed part 9 of the machine, the other end being fixed to a mobile part 10 of the machine, there being the possibility of extending the latter end in the direction of the arrow F.

The tubular elements 2 have at least one wall 2a, one front edge 2b and one rear edge 2c, and are made, for example, of steel, being of the known type.

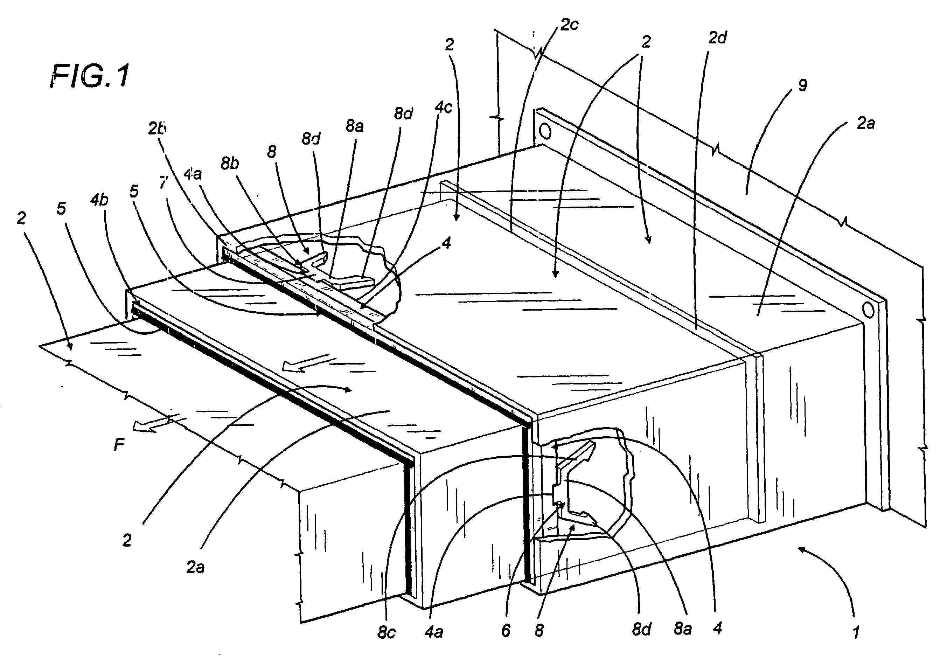

The scraper device and shock absorber device assembly is labelled 3. As indicated in figures 1 to 5, the shock absorber device includes at least one shock absorber part 6, which is fixed at the rear margin 4c of a bar 4, which in turn has a scraper 5 fitted at its front margin 4b. The bar 4 is fixed to the front edge 2b of the tubular element 2.

The shock absorber part 6 includes a portion 7 which connect it to the rear margin 4c of the bar 4, inserted in a slotted zone 4a by means of two tabs 12.

The shock absorber device 6 also includes two flexible arms 8 which extend in a plane parallel with the direction of extension of the arrow F, said arms being divergent. Each arm 8 consists of a first section 8a, substantially parallel with the rear margin 4c and at a given distance d from the said margin, and a second section 8c, connected to the first section 8a.

The second section 8c extends away from the first section 8a at an oblique angle to the rear margin 4c. Section 8a and the two sections 8c substantially form a U-shape with diverging ends.

The angle of the second section 8c to the first section 8a is between 95 and 175 degrees and is preferably 105 degrees.

There is a chamfer or pivot point 8b on the surface facing the rear margin 4c at the connection between the first section 8a and the second section 8c. The end of the second section 8c has a chamfered point 8d or is shaped so that the end is pointed 8d.

The function of these parts 8b and 8d and of the connecting portion 7 will be made clear in the explanation of device operation.

The material used to make the shock absorber device may be metal, for example harmonic steel, covered with a layer of plastic to prevent wear on the contact surface, or the shock absorber device may be made completely of plastic with suitable elastic characteristics.

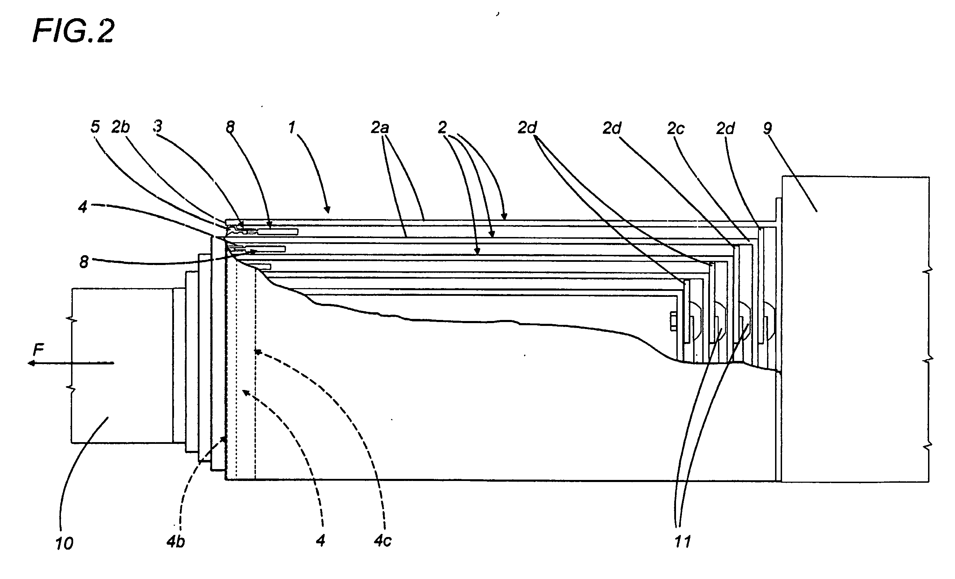

The telescopic protection device 1 starts in the condition illustrated in figure 2. In the said figure the tubular elements 2 are completely retracted and are almost completely inside one another. The tubular elements 2 slide relative to one another on special shoes, not illustrated, and have an end stop 11 to dampen the retraction stroke when the said elements are closing.

When the mobile part 10 of the automatic machine, machine tool or robot moves, the telescopic protection device 1 starts to extend in the direction of the arrow F.

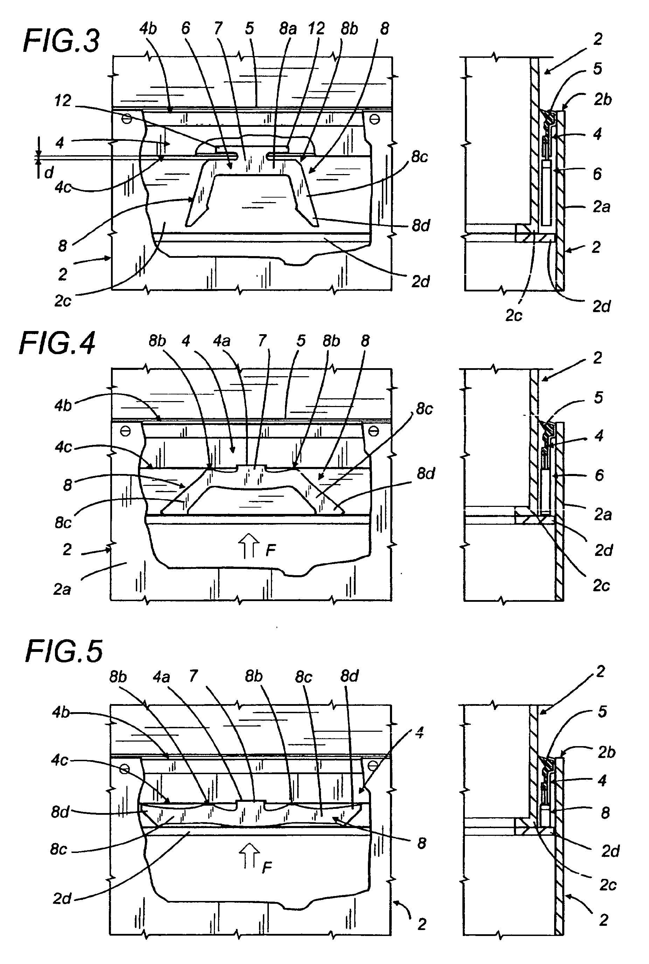

Figure 3 illustrates the condition of two tubular elements 2 which are almost completely extended, but with the shock absorber part 6 still not operating. Subsequently, continuing extension, the shock absorber part 6 makes contact with the stop 2d of next smaller adjacent tubular element 2. The special chamfered or pointed shape of the end 8d of the arm 8 of the shock absorber part 6 rests against and slides on the stop 2d, facilitating the divergence of the arms 8.

At the same time, the section 8a of the arm 8, initially straight, tends to curve following divergence of the section 8c and because it is at a distance d from the rear margin 4c of the bar 4. Therefore, even the chamfer 8b makes contact with the rear margin 4c of the bar 4.

This condition, with divergent sections 8c and chamfers 8b in contact with the bar 4 is illustrated in figure 4.

Then, continuing the extension of the tubular elements 2, the sections 8c, pivoting on the chamfer 8b, continue their divergence, increasing the angle made to section 8a, whilst section 8a continues to curve, its middle part moving away from the rear margin 4c and so increasing its distance relative to the initial distance d, and tensioning the connecting portion 7.

The final condition, consisting in complete extension of the protection device, and so complete shock absorption, is illustrated in figure 5.

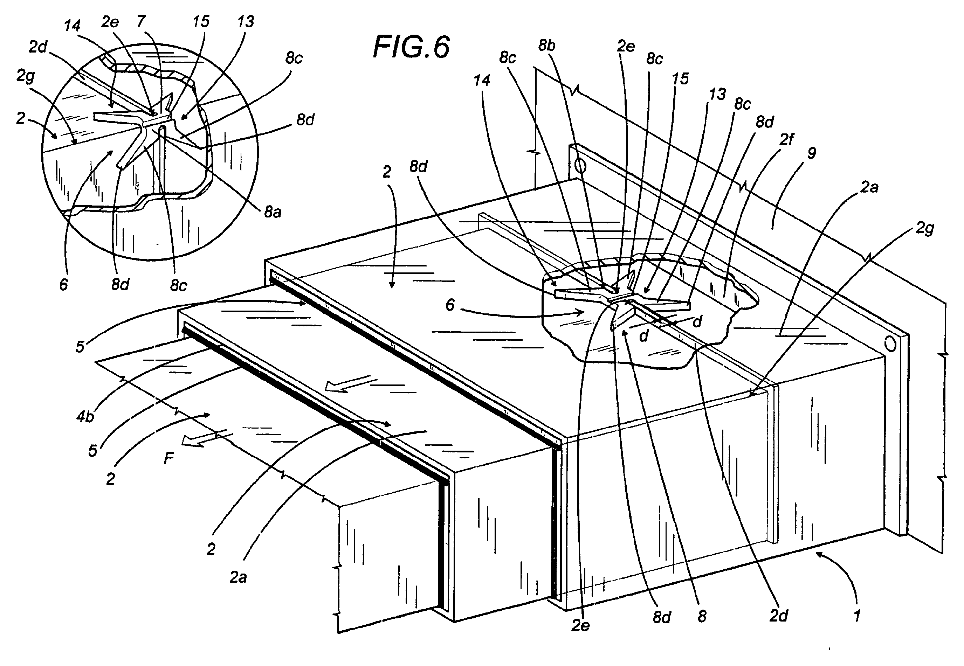

Alternatively, the shock absorber part may be fitted to the stop 2d of the tubular elements independent of the scrapers. In this case, as shown in the embodiment illustrated in figure 6, the shock absorber device 6 may be attached to another shock absorber device 13 of almost the same shape.

This second shock absorber device 13 absorbs the impact between the tubular elements 2 when the protection device is on its retraction stroke, thus substituting the end stops 11.

As shown in figure 6, the shock absorber device 13 is positioned and operates between two stops, one external 2d and the other internal 2f, of two adjacent tubular elements 2.

In the embodiment shown in figure 6, the two shock absorber devices 6 and 13 can be joined to form a single shock absorber device 14 with the twin function of absorbing the impact between the tubular elements both during extension and during retraction. The shock absorber device 14 is inserted in a special seat 2e made in the stop 2d and may also be positioned at the edge 2g of the horizontal and vertical walls of the tubular element 2.

This edge position helps to straighten the protection device at the end of the extension or retraction stroke, and allows the number of shock absorber elements to be reduced to two for each tubular element 2, thus being very economical.

To promote the bending of the shock absorber device 14 on the horizontal and vertical walls of the tubular element 2, the shock absorber device 14 has a crosswise groove 15 parallel with the edge 2g of the tubular element 2.

During operation, it should be noticed that shock absorption is due to different factors.

Initially, there is the sliding of the point 8d on the stop 2d, divergence of the sections 8c and consequent curving of section 8a. Then, increasing the divergence of the sections 8c, there is a relative rotation between sections 8a and 8c, the chamfer 8b forming the pivot. At the same time, section 8a tensions the connecting portion 7. This shock absorption method also applies in the case of shock absorber device 13 during the retraction stroke of the protection device, where it rests on the stop 2f.

The shock absorption capacities of this device are clearly significantly greater than those of known devices. The shock absorbing action develops gradually over a relatively long stroke.

Thanks to its significant shock absorption capacities, only a few shock absorber parts need be fitted on the tubular elements, and it may even be possible to fit only one shock absorber part for each tubular element.

The present invention, thus designed for the said objects, may be subject to numerous modifications and variations, all encompassed by the original design concept. Moreover, all components may be replaced with technically equivalent parts.

## Claims

1. A shock absorber device for telescopic protection devices, said protection devices including a plurality of tubular covering elements (2) which slide inside one another in a direction (F), each tubular element (2) having a front edge (2b) and a rear edge (2c), said front edge (2b) being fitted with a scraper (5) connected to the front margin (4b) of a supporting bar (4), also provided with a rear margin (4c), said bar being fixed along the front edge (2b) and said rear edge (2c) being fitted with a stop (2d) cooperating with the rear margin (4c) of the bar (4) of the next adjacents element (2) during the extension of the tubular elements (2), wherein the device includes at least a first shock absorber part (6), being positioned and operating between the rear margin (4c) and the stop (2d) of two adjacent tubular elements (2), said first shock absorber part (6) alternatively being fitted to the stop (2d), said first shock absorber part (6) comprising least a portion (7) for connection to a slotted zone or seat (4a, 2e) on the stop (2d) by connecting means (12) and at least one flexible arm (8) in a plane substantially parallel with the direction of sliding (F), said flexible arm (8) extending from the connecting portion (7) and protruding from the bar (4) or stop (2d) towards the rear margin (4c), so as to absorb the impact between the two adjacent tubular elements (2), when the telescopic protection device is in the extension stage; **characterised in that the flexible arm (8) includes a first section (8a), this being substantially perpendicular to the direction of extension (F) of the tubular elements (2) and being separated by a given distance (d) from the element (4c, 2d) to which it is connected; and a second section (8c), this being connected to the first section (8a) and extending away from the first section at an oblique angle to the direction of extension (F) of the tubular elements (2).**

2. A shock absorber device for telescopic protection devices, said protection devices including a plurality of tubular covering elements (2) which slide inside one another in a direction (F), each tubular element (2) having a front edge (2b) and a rear edge (2c), said front edge (2b) being fitted with a scraper (5) connected to the front margin (4b) of a supporting bar (4), also provided with a rear margin (4c), said bar being fixed along the front edge (2b) and said rear edge (2c) being fitted with a stop (2d) cooperating with the rear margin (4c) of the bar (4) of the next adjacent element (2) during the extension of the tubular elements (2), wherein the device includes at least a first shock absorber part (6), being positioned and operating between the rear margin (4c) and the stop (2d) of two adjacent tubular elements (2), said first shock absorber part (6) comprising at least a portion (7) for connection to a slotted zone or seat (4a, 2e) by connecting means (12) and at least one flexible arm (8) in a plane substantially parallel with the direction of sliding (F), said flexible arm (8) extending from the connecting portion (7) and protruding from the bar (4) towards the stop (2d), so as to absorb the impact between the two adjacent tubular elements (2), when the telescopic protection device is in the extension stage; **characterised in that** the slotted zone or seat (4a, 2e) is on the rear margin (4c) and said first shock absorber part (6) is fitted to said rear margin (4c) and **in that** the flexible arm (8) includes a first section (8a), this being substantially perpendicular to the direction of extension (F) of the tubular elements (2) and being separated by a given distance (d) from the element (4c, 2d) to which it is connected; and a second section (8c), this being connected to the first section (8a) and extending away from the first section at an oblique angle to the direction of extension (F) of the tubular elements (2).

3. The shock absorber device for telescopic protection devices as described in claim 1, **characterised in that** it includes at least one second shock absorber device (13), positioned and operating between two stops, one external (2d) and one internal (2f), of two adjacent tubular elements (2), so as to absorb the impact between the two adjacent tubular elements (2), during the telescopic protection device retraction stroke.

4. The shock absorber device for telescopic protection devices as described in claim 3, **characterised in that** the second shock absorber device (13) consists of at least a portion (7) for the connection to a slotted zone or seat (2e) of the stop (2d) by connecting means (12) and at least one flexible arm (8), said arm being positioned in a plane substantially parallel with the direction of sliding (F), said flexible arm (8) extending from the connecting portion (7) and protruding from the stop (2d) of a tubular element (2) towards the stop (2d) of another, adjacent, tubular element (2).

5. The shock absorber device for telescopic protection devices as described in claims 3 or 4 , **characterised in that** the first shock absorber part (6) and the second shock absorber part (13) are joined together by the connecting portion (7), forming a single shock absorber element (14) with a twin shock absorption function when the telescopic protection device is extending and retracting.

6. The shock absorber device for telescopic protection devices as described in claims 1 to 5, **characterised in that** the first and second shock absorber parts (6, 13) each include two divergent flexible arms (8).

7. The shock absorber device for telescopic protection devices as described in claim 1 or 2, **characterised in that** the second section (8c) of the flexible arm (8) of the shock absorber parts (6, 13) can tilt at an angle of between 95 and 175 degrees relative to the first section (8a).

8. The shock absorber device for telescopic protection devices as described in claims 1, 2 and 7, **characterised in that** the second section (8c) of the flexible arm (8) of the shock absorber parts (6, 13) can tilt at an angle of 105 degrees relative to the first section (8a).

9. The shock absorber device for telescopic protection devices as described in claims 1 to 8, **characterised in that** the shock absorber parts (6, 13) are made of flexible sheet metal covered with a layer of strong plastic.

10. The shock absorber device for telescopic protection devices as described in claims 1 to 8, **characterised in that** the shock absorber parts (6, 13) are completely made of an elastic plastic.

11. The shock absorber device as described in the previous claims, **characterised in that**, at the connection of the first section (8a) and second section (8c) of the flexible arm (8), the surface facing the fixing element (4, 2d) of the shock absorber part (6, 13) has a chamfer or pivot point (8b), so that when the arm (8) is pressed towards the fixing element (4, 2d), the second section (8c), resting on the chamfer or pivot point (8b), rotates relative to the first section (8a).

12. The shock absorber device for telescopic protection devices as described in the previous claims, **characterised in that** the end of the second section (8c) of the flexible arm (8) facing the stop (2d, 4) has a point (8d), so that when the arm (8) is pressed towards the fixing element (2d, 4) the point (8d) facilitates the rotation and relative divergence of the second section (8c) from the first section (8a).

13. The shock absorber device for telescopic protection devices as described in the previous claims, **characterised in that** the tubular elements (2) include a plurality of shock absorber parts (6, 13, 14).

14. The shock absorber device for telescopic protection devices as described in claims 6 to 13**, characterised in that** the shock absorber parts (6, 13, 14) are set at an angle at the edge (2g) of the horizontal and vertical walls of the tubular elements (2).

15. The shock absorber device for telescopic protection devices as described in the previous claims, **characterised in that** the shock absorber parts (6, 13, 14) include a groove (15), said groove being parallel to the edge (2g) of the horizontal and vertical walls of the tubular elements (2), so as to facilitate the bending of the shock absorber part (6, 13, 14) beside the said horizontal and vertical walls of the tubular elements (2).

## Patentansprüche

1. Stossdämpfervorrichtung für teleskopische Schutzvorrichtungen, wobei die genannten Schutzvorrichtungen eine Anzahl von rohrförmigen Abdeckelementen (2) enthalten, welche in einer Richtung (F) ineinander gleiten, wobei jedes rohrförmigen Element (2) eine vordere Kante (2b) und eine hintere Kante (2c) hat, wobei die genannte vordere Kante (2b) mit einem Abstreifer (5) versehen ist, angeschlossen an den vorderen Rand (4b) einer Trägerstange (4), ebenfalls versehen mit einem hinteren Rand (4c), wobei die genannte Stange entlang der vorderen Kante (2b) befestigt und die genannte hintere Kante (2c) mit einem Anschlag (2d) versehen ist, der während dem Ausfahren der rohrförmigen Elemente (2) mit dem hinteren Rand (4c) der Stange (4) des nächsten angrenzenden Elementes (2) zusammenwirkt, wobei die Vorrichtung wenigstens ein erstes Stossdämpferelement (6) enthält, das zwischen dem hinteren Rand (4c) und dem Anschlag (2d) von zwei aneinandergrenzenden rohrförmigen Elementen (2) positioniert ist und wirkt, wobei das genannte erste Stossdämpferelement (6) an dem Anschlag (2d) befestigt ist, wobei das genannte erste Stossdämpferelement (6) wenigstens einen Abschnitt (7) zur Verbindung mit einem geschlitzten Bereich oder Sitz (4a, 2e) an dem Anschlag (2d) enthält, und zwar durch Verbindungsmittel (12), und wenigstens einen flexiblen Arm (8) in einer im wesentlichen parallel zu der Gleitrichtung (F) verlaufenden Ebene, wobei sich der flexible Arm (8) von dem Verbindungsabschnitt (7) aus erstreckt und von dem Anschlag (2d) aus in Richtung des hinteren Bereiches (4c) hervorsteht, so dass der Stoss zwischen zwei aneinandergrenzenden rohrförmigen Elementen (2) aufgefangen wird, wenn sich die teleskopische Schutzvorrichtung in der Phase des Ausfahrens befindet; **dadurch gekennzeichnet, dass** der flexible Arm (8) einen ersten Abschnitt (8a) enthält, wobei dieser im wesentlichen lotrecht zu der Ausfahrrichtung (F) der rohrförmigen Elemente (2) verläuft und um einen vorgegebenen Abstand (d) von dem Element (4c, 2d), mit welchem er verbunden ist, getrennt ist; und einen zweiten Abschnitt (8c), wobei dieser an den ersten Abschnitt (8a) angeschlossen ist und sich von dem ersten Abschnitt fort erstreckt, und zwar in einem schrägen Winkel zu der Ausfahrrichtung (F) der rohrförmigen Elemente (2).

2. Stossdämpfervorrichtung für teleskopische Schutzvorrichtungen, wobei die genannten Schutzvorrichtungen eine Anzahl von rohrförmigen Abdeckelementen (2) enthalten, welche in einer Richtung (F) ineinander gleiten, wobei jedes rohrförmige Element (2) eine vordere Kante (2b) und eine hintere Kante (2c) hat, wobei die genannte vordere Kante (2b) mit einem Abstreifer (5) versehen ist, angeschlossen an den vorderen Rand (4b) einer Trägerstange (4), ebenfalls versehen mit einem hinteren Rand (4c), wobei die genannte Stange entlang der vorderen Kante (2b) befestigt und die genannte hintere Kante (2c) mit einem Anschlag (2d) versehen ist, der während des Ausfahrens der rohrförmigen Elemente (2) mit dem hinteren Rand (4c) der Stange (4) des nächsten angrenzenden Elementes (2) zusammenwirkt, wobei die Vorrichtung wenigstens ein erstes Stossdämpferelement (6) enthält, das zwischen dem hinteren Rand (4c) und dem Anschlag (2d) von zwei aneinandergrenzenden rohrförmigen Elementen (2) positioniert ist und wirkt, wobei das genannte erste Stossdämpferelement (6) wenigstens einen Abschnitt (7) zur Verbindung mit einem geschlitzten Bereich oder Sitz (4a, 2e) enthält, und zwar durch Verbindungsmittel (12), und wenigstens einen flexiblen Arm (8) in einer im wesentlichen parallel zu der Gleitrichtung (F) verlaufenden Ebene, wobei sich der flexible Arm (8) von dem Verbindungsabschnitt (7) aus erstreckt und von der Stange (4) aus in Richtung des Anschlags (2d) hervorsteht, so dass der Stoss zwischen zwei aneinandergrenzenden rohrförmigen Elementen (2) aufgefangen wird, wenn sich die teleskopische Schutzvorrichtung in der Phase des Ausfahrens befindet; **dadurch gekennzeichnet, dass** sich der geschlitzte Bereich oder Sitz (4a, 2e) an dem hinteren Rand (4c) befindet, und dass das genannte erste Stossdämpferelement (6) an dem genannte hinteren Rand (4c) befestigt ist, und dadurch, dass der flexible Arm (8) einen ersten Abschnitt (8a) enthält, wobei dieser im wesentlichen lotrecht zu der Ausfahrrichtung (F) der rohrförmigen Elemente (2) verläuft und um einen vorgegebenen Abstand (d) von dem Element (4c, 2d), mit welchem er verbunden ist, getrennt ist; und einen zweiten Abschnitt (8c), wobei dieser an den ersten Abschnitt (8a) angeschlossen ist und sich von dem ersten Abschnitt fort erstreckt, und zwar in einem schrägen Winkel zu der Ausfahrrichtung (F) der rohrförmigen Elemente (2).

3. Stossdämpfervorrichtung für teleskopische Schutzvorrichtungen nach Patentanspruch 1, **dadurch gekennzeichnet, dass** sie wenigstens ein zweites Stossdämpferelement (13) enthält, positioniert und wirkend zwischen zwei Anschlägen, einem äusseren (2d) und einem inneren (2f), von zwei aneinandergrenzenden rohrförmigen Elementen (2), so dass der Stoss zwischen den beiden aneinandergrenzenden rohrförmigen Elementen (2) während des Rückfahrhubes der teleskopischen Schutzvorrichtung aufgefangen wird.

4. Stossdämpfervorrichtung für teleskopische Schutzvorrichtungen nach Patentanspruch 3, **dadurch gekennzeichnet, dass** das zweite Stossdämpferelement (13) aus wenigstens einem Abschnitt (7) für die Verbindung mit einem geschlitzten Bereich oder Sitz (2e) des Anschlags (2d) besteht, und zwar durch Verbindungsmittel (12), und wenigstens einen flexiblen Arm (8), wobei der genannte Arm (8) in einer Ebene im wesentlichen parallel zu der Gleitrichtung (F) positioniert ist, wobei der genannte flexible Arm (8) sich von dem Verbindungsabschnitt (7) aus erstreckt und von dem Anschlag (2d) eines rohrförmigen Elementes (2) in Richtung des Anschlags (2d) eines anderen, angrenzenden rohförmigen Elementes (2) hervorsteht.

5. Stossdämpfervorrichtung für teleskopische Schutzvorrichtungen nach Patentanspruch 3 oder 4, **dadurch gekennzeichnet, dass** das erste Stossdämpferelement (6) und das zweite Stossdämpferelement (13) durch den Verbindungsabschnitt (7) miteinander verbunden sind, wobei sie ein einziges Stossdämpferelement (14) mit einer doppelten Stossdämpferfunktion bilden, wenn die teleskopische Schutzvorrichtung aus- und zurückgefahren wird.

6. Stossdämpfervorrichtung für teleskopische Schutzvorrichtungen nach den Patentansprüchen von 1 bis 5, **dadurch gekennzeichnet, dass** die ersten und zweiten Stossdämpferelemente (6, 13) jeweils zwei divergierende flexible Arme (8) enthalten.

7. Stossdämpfervorrichtung für teleskopische Schutzvorrichtungen nach Patentanspruch 1 oder 2, **dadurch gekennzeichnet, dass** der zweite Abschnitt (8c) des flexiblen Armes (8) der Stossdämpferelemente (6, 13) um einen Winkel zwischen 95 und 175 Grad im Verhältnis zu dem ersten Abschnitt (8a) schwenken kann.

8. Stossdämpfervorrichtung für teleskopische Schutzvorrichtungen nach den Patentansprüchen 1, 2 und 7, **dadurch gekennzeichnet, dass** der zweite Abschnitt (8c) des flexiblen Armes (8) der Stossdämpferelemente (6, 13) um einen Winkel von 105 Grad im Verhältnis zu dem ersten Abschnitt (8a) schwenken kann.

9. Stossdämpfervorrichtung für teleskopische Schutzvorrichtungen nach den Patentansprüchen von 1 bis 8, **dadurch gekennzeichnet, dass** die Stossdämpferelemente (6, 13) aus flexiblem Blech hergestellt sind, überzogen mit einer Schicht aus festem Kunststoff.

10. Stossdämpfervorrichtung für teleskopische Schutzvorrichtungen nach den Patentansprüchen von 1 bis 8, **dadurch gekennzeichnet, dass** die Stossdämpferelemente (6, 13) vollkommen aus einem elastischen Kunststoff hergestellt sind.

11. Stossdämpfervorrichtung nach den vorstehenden Patentansprüchen, **dadurch gekennzeichnet, dass** an der Verbindung des ersten Abschnitts (8a) mit dem zweiten Abschnitts (8c) des flexiblen Armes (8) die dem feststehenden Element (4, 2d) des Stossdämpferelementes (6, 13) zugewandte Fläche eine Abschrägung oder ein Drehpunkt (8b) vorhanden ist, so dass, wenn der Arm (8) in Richtung des feststehenden Elementes (4, 2d) gedrückt wird, sich der an der Abschrägung oder dem Drehpunkt (8b) verbleibende zweite Abschnitt (8c) im Verhältnis zu dem ersten Abschnitt (8a) dreht.

12. Stossdämpfervorrichtung für teleskopische Schutzvorrichtungen nach den vorstehenden Patentansprüchen, **dadurch gekennzeichnet, dass** das dem Anschlag (2d, 4) zugewandte Ende des zweiten Abschnitts (8c) des flexiblen Armes (8) eine Verjüngung (8d) aufweist, so dass, wenn der Arm (8) in Richtung des feststehenden Elementes (2d, 4) gedrückt wird, die Verjüngung (8d) das Drehen und entsprechende Divergieren des zweiten Abschnitts (8c) von dem ersten Abschnitt (8a) erleichtert.

13. Stossdämpfervorrichtung für teleskopische Schutzvorrichtungen nach den vorstehenden Patentansprüchen, **dadurch gekennzeichnet, dass** die rohrförmigen Elemente (2) eine Anzahl von Stossdämpferelementen (6, 13, 14) enthalten.

14. Stossdämpfervorrichtung für teleskopische Schutzvorrichtungen nach den vorstehenden Patentansprüchen von 6 bis 13, **dadurch gekennzeichnet, dass** die Stossdämpferelemente (6, 13, 14) in einem Winkel an der Kante (2g) der horizontalen und vertikalen Wände der rohrförmigen Elemente (2) angeordnet sind.

15. Stossdämpfervorrichtung für teleskopische Schutzvorrichtungen nach den vorstehenden Patentansprüchen, **dadurch gekennzeichnet, dass** die Stossdämpferelemente (6, 13, 14) eine Rille (15) enthalten, wobei die genannte Rille parallel zu der Kante (2g) der horizontalen und vertikalen Wände der rohrförmigen Elemente (2) verläuft, so dass das Biegen der Stossdämpferelemente (6, 13, 14) neben den genannten horizontalen und vertikalen Wänden der rohrförmigen Elemente (2) erleichtert wird.

## Revendications

1. Un dispositif amortisseur pour protections télescopiques, lesdites protections comprenant une pluralité d'éléments tubulaires de couverture (2) qui coulissent les uns dans les autres dans une direction (F), chaque élément tubulaire (2) ayant un bord avant (2b) et un bord arrière (2c), ledit bord avant (2b) étant pourvu d'un racleur (5) associé à la bordure avant (4b) d'une barre de support (4), présentant aussi une bordure arrière (4c), ladite barre étant fixée le long du bord avant (2b) et ledit bord arrière (2c) étant pourvu d'une butée (2d) qui coopère avec la bordure arrière (4c) de la barre (4) de l'élément adjacent (2) qui suit durant l'extension des éléments tubulaires (2), où le dispositif comprend au moins un premier organe amortisseur (6) positionné et fonctionnant entre la bordure arrière (4c) et la butée (2d) de deux éléments tubulaires (2) adjacents, ledit premier organe amortisseur (6) étant associé à la butée (2d) et ledit premier organe amortisseur (6) comprenant au moins une partie (7) de raccordement à une zone évidée ou logement (4a, 2e) de la butée (2d) par l'intermédiaire de moyens de raccordement (12) et au moins un bras flexible (8) situé dans un plan essentiellement parallèle à la direction de coulissement (F), ledit bras flexible (8) s'étendant à partir de la partie de raccordement (7) et dépassant de la butée (2d) vers la bordure arrière (4c) de manière à absorber le choc entre les deux éléments tubulaires (2) adjacents quand les protections télescopiques sont à l'état étendu ; ledit dispositif amortisseur étant **caractérisé en ce que** le bras flexible (8) comprend une première section (8a) qui est essentiellement perpendiculaire à la direction d'extension (F) des éléments tubulaires (2) et est séparée d'une distance donnée (d) de l'élément (4c, 2d) auquel elle est raccordée ; et une seconde section (8c) qui est raccordée à la première section (8a) et s'éloigne de la première section elle-même en s'étendant de biais par rapport à la direction d'extension (F) des éléments tubulaires (2).

2. Un dispositif amortisseur pour protections télescopiques, lesdites protections comprenant une pluralité d'éléments tubulaires de couverture (2) qui coulissent les uns dans les autres dans une direction (F), chaque élément tubulaire (2) ayant un bord avant (2b) et un bord arrière (2c), ledit bord avant (2b) étant pourvu d'un racleur (5) associé à la bordure avant (4b) d'une barre de support (4), présentant aussi une bordure arrière (4c), ladite barre étant fixée le long du bord avant (2b) et ledit bord arrière (2c) étant pourvu d'une butée (2d) qui coopère avec la bordure arrière (4c) de la barre (4) de l'élément adjacent (2) qui suit durant l'extension des éléments tubulaires (2), où le dispositif comprend au moins un premier organe amortisseur (6) positionné et fonctionnant entre la bordure arrière (4c) et la butée (2d) de deux éléments tubulaires (2) adjacents, ledit premier organe amortisseur (6) comprenant au moins une partie (7) de raccordement à une zone évidée ou logement (4a, 2e) par l'intermédiaire de moyens de raccordement (12) et au moins un bras flexible (8) situé dans un plan essentiellement parallèle à la direction de coulissement (F), ledit bras flexible (8) s'étendant à partir de la partie de raccordement (7) et dépassant de la barre (4) vers la butée (2d) de manière à absorber le choc entre les deux éléments tubulaires (2) adjacents quand les protections télescopiques sont à l'état étendu ; ledit dispositif amortisseur étant **caractérisé en ce que** la zone évidée ou le logement (4a, 2e) est situé sur la bordure arrière (4c) et ledit premier organe amortisseur (6) est associé à ladite bordure arrière (4c), et **en ce que** le bras flexible (8) comprend une première section (8a) qui est essentiellement perpendiculaire à la direction d'extension (F) des éléments tubulaires (2) et est séparée d'une distance donnée (d) de l'élément (4c, 2d) auquel elle est raccordée ; et une seconde section (8c) qui est raccordée à la première section (8a) et s'éloigne de la première section elle-même en s'étendant de biais par rapport à la direction d'extension (F) des éléments tubulaires (2).

3. Le dispositif amortisseur pour protections télescopiques selon la revendication 1, **caractérisé en ce qu'**il comprend au moins un second organe amortisseur (13) positionné et fonctionnant entre deux butées, une butée extérieure (2d) et une butée intérieure (2f), de deux éléments tubulaires (2) adjacents de manière à absorber le choc entre les deux éléments tubulaires (2) adjacents durant la course de rentrée des protections télescopiques.

4. Le dispositif amortisseur pour protections télescopiques selon la revendication 3, **caractérisé en ce que** le second organe amortisseur (13) est constitué d'au moins une partie (7) de raccordement à une zone évidée ou logement (2e) de la butée (2d) par l'intermédiaire de moyens de raccordement (12) et d'au moins un bras flexible (8), ledit bras étant situé dans un plan essentiellement parallèle à la direction de coulissement (F), ledit bras flexible (8) s'étendant à partir de la partie de raccordement (7) et dépassant de la butée (2d) d'un élément tubulaire (2) vers la butée (2d) d'un autre élément tubulaire (2) adjacent.

5. Le dispositif amortisseur pour protections télescopiques selon la revendication 3 ou 4, **caractérisé en ce que** le premier organe amortisseur (6) et le second organe amortisseur (13) sont associés l'un à l'autre par la partie de raccordement (7), définissant ainsi un seul élément amortisseur (14) ayant une double fonction d'absorption des chocs quand les protections télescopiques sont étendues et rentrées.

6. Le dispositif amortisseur pour protections télescopiques selon les revendications de 1 à 5, **caractérisé en ce que** les premier et second organes amortisseurs (6, 13) comprennent chacun deux bras flexibles (8) divergents.

7. Le dispositif amortisseur pour protections télescopiques selon la revendication 1 ou 2, **caractérisé en ce que** la seconde section (8c) du bras flexible (8) des organes amortisseurs (6, 13) peut être inclinée d'un angle compris entre 95 et 175 degrés par rapport à la première section (8a).

8. le dispositif amortisseur pour protections télescopiques selon les revendications 1, 2 et 7, **caractérisé en ce que** la seconde section (8c) du bras flexible (8) des organes amortisseurs (6, 13) peut être inclinée d'un angle de 105 degrés par rapport à la première section (8a).

9. Le dispositif amortisseur pour protections télescopiques selon les revendications de 1 à 8, **caractérisé en ce que** les organes amortisseurs (6, 13) sont réalisés en tôle flexible recouverte d'une couche de plastique solide.

10. Le dispositif amortisseur pour protections télescopiques selon les revendications de 1 à 8, **caractérisé en ce que** les organes amortisseurs (6, 13) sont entièrement réalisés en plastique souple.

11. Le dispositif amortisseur selon les revendications précédentes, **caractérisé en ce qu'**au niveau du raccordement de la première section (8a) et de la seconde section (8c) du bras flexible (8), la surface orientée vers l'élément de fixation (4, 2d) de l'organe amortisseur (6, 13) présente un chanfrein ou point de pivotement (8b) de sorte que lorsque le bras (8) est pressé vers l'élément de fixation (4, 2d), la seconde section (8c), reposant sur le chanfrein ou point de pivotement (8b), tourne par rapport à la première section (8a).

12. Le dispositif amortisseur pour protections télescopiques selon les revendications précédentes, **caractérisé en ce que** l'extrémité de la seconde section (8c) du bras flexible (8) orientée vers la butée (2d, 4) présente une pointe (8d) de sorte que lorsque le bras (8) est pressé vers l'élément de fixation (2d, 4), la pointe (8d) facilite la rotation et l'écartement correspondant de la seconde section (8c) par rapport à la première section (8a).

13. Le dispositif amortisseur pour protections télescopiques selon les revendications précédentes, **caractérisé en ce que** les éléments tubulaires (2) comprennent une pluralité d'organes amortisseurs (6, 13, 14).

14. Le dispositif amortisseur pour protections télescopiques selon les revendications de 6 à 13, **caractérisé en ce que** les organes amortisseurs (6, 13, 14) sont montés en angle au niveau de l'arête (2g) des parois horizontales et verticales des éléments tubulaires (2).

15. Le dispositif amortisseur pour protections télescopiques selon les revendications précédentes, **caractérisé en ce que** les organes amortisseurs (6, 13, 14) comprennent une rainure (15), ladite rainure étant parallèle à l'arête (2g) des parois horizontales et verticales des éléments tubulaires (2) de manière à faciliter le pliage de l'organe amortisseur (6, 13, 14) sur lesdites parois horizontales et verticales des éléments tubulaires (2).
